# EUROPÄISCHE PATENTANMELDUNG

(11) **EP 0 865 190 A2**
(43) Veröffentlichungstag der Anmeldung: **16.09.1998**
(21) Anmeldenummer: 98100756.0
(22) Anmeldetag: 17.01.1998
(51) Int. Cl.: H04M 7/00, H04M 3/00, H04L 12/28

(54) **Verfahren zur Leistungserweiterung eines Zugangsbereichs eines Telefonnetzes**

(30) Priorität: 13.03.1997 DE 19710347
(71) Anmelder: Deutsche Telekom AG, 53113 Bonn (DE)
(72) Erfinder: Bockmann, Ulrich, Ing-grad, 53119 Bonn (DE); Weiss, Klaus Bernd, Dipl.-Ing., 53129 Bonn (DE)

(57) **Zusammenfassung**

Die Erfindung betrifft ein Verfahren zur Leistungserweiterung eines Zugangsbereichs eines Telefonnetzes. Der Zugangsbereich wird umkonfiguriert, indem seine Komponenten Netzabschluß beim Kunden (POA), kundennaher Leitungs-Konzentrationspunkt (POC) und Netzknoten (TMP) mit zusätzlicher Systemtechnik ausgestattet werden. Das kundennahe Kupferkabel-Netz (6) wird im Leitungs-Konzentrationspunkt (POC) in Form eines Sternkopplers (9) mit der zum Netzknoten (TMP) führenden Datenleitung (3) gekoppelt, wobei der Datenfluß nach dem LAN-Prinzip durch im Bereich des Netzknotens (TMP) installierte und in den Konzentrationspunkt abgebildetet Übermittlungstechnik (10) gesteuert wird. Damit bietet das Kupferkabel-Netz (6) die Vorteile eines LAN, z.B. bidirektionaler Datentransfer und gleichzeitiger Unterhalt mehrerer Verbindungen. Weiterhin werden Server (11) im Netz installiert, von denen der Netzabschluß (POA) verschiedenartige Multimedia-Dienste abrufen kann. Der Zugangsbereich wird somit einer integrativen Nutzung für alle Kommunikationsdienste zugeführt, wodurch die vorhandenen Leitungskapazitäten optimal ausgenutzt werden.

## Beschreibung

Die Erfindung betrifft ein Verfahren zur Leistungserweiterung eines Zugangsbereichs eines Telefonnetzes gemäß dem Oberbegriff des Anspruchs 1.

Die sich derzeit entwickelnde Informationsgesellschaft macht auch einen Ausbau bestehender Netze im Zugangsbereich erforderlich. Die bestehenden Netzwerke lassen sich gemäß ihrer Funktion und Auslegung in zwei Klassen unterteilen:

Zum einen gibt es die Netze der Individualkommunikation, insbesondere das bidirektionale Telefonnetz. Die Daten werden dabei über einen oder mehrere Netzknoten von einem Anwender zu einem (oder mehreren) anderen übertragen. In räumlicher Nähe zum Kunden werden die Leitungen wie bei den Netzen der Verteilkommunikation zu einem Leitungs-Konzentrationspunkt, dem sogenannten Kabelverzweiger, zusammengeführt und von dort zum Anwender geführt und an einem Netzabschluß zur Verfügung gestellt. Die Leitungen vom Kunden zum Konzentrationspunkt sind in der Regel Kupfer-Doppeladern und die Leitungen von dort zur Vermittlungsstelle zum Teil bereits Glasfasern, jedoch größtenteils bisher ebenfalls Kupfer-Doppeladern. Die Netze der Individualkommunikation sind im anwenderseitigen Zugangsbereich in beide Richtungen, d.h. vom Kunden weg und zum Kunden hin, zu benutzen, und der Kunde kann die zu übertragenden Daten (z.B. Telefon, Fax, Internet) selbst erzeugen.

Die zweite Netzklasse umfaßt Netze für Verteilkommunikation, beispielsweise Netze für Kabelfernsehen- und Radio. Von der zentralen Einspeisungsstelle werden die analogen oder digitalen Daten dem langreichweitigen Zubringernetz zugeführt, von wo die Daten an einem Netzknoten in den Zugangsbereich eingespeist und zu einem Leitungs-Konzentrationspunkt in räumlicher Nähe (einige 100 m) zum Kunden geführt werden. Dort werden die Daten gegebenenfalls nochmals verarbeitet, z.B. verstärkt, und dann zum Anwender übertragen und ihm am Netzabschluß zur Verfügung gestellt. Diese Netze sind im anwenderseitigen Zugangsbereich passiv, d.h. im allgemeinen ohne die bidirektionale Möglichkeit der Einflußnahme des Kunden auf die ihm zur Verfügung gestellten Daten (Daten-Einbahnstraße). Da die Daten der Verteilkommunikation, z.B. Fernsehen, Radio, eine hohe Frequenzbandbreite aufweisen, spricht man auch vom Breitbandkabel-Netz; der entsprechende Leitungs-Konzentrationspunkt wird Curb oder C-Verstärker genannt. Die Leitungen des Breitbandkabelnetzes vom Netzknoten zum C-Verstärker und von dort zum Kunden sind in der Regel Kupfer-Koaxialkabel, teilweise auch Glasfasern.

Das gesteigerte Angebot an Leistungen der Verteilkommunikation, z.B. mehr Fernseh- und Radiokanäle, sowie im Bereich der Individualkommunikation, z.B. neue Telefonkonzepte, Internet und dergleichen, und die gesteigerte Nachfrage danach machen den Ausbau der bestehenden Netzwerke erforderlich. Nach dem gegenwärtigen Stand der Technik werden die bestehenden Netzwerkklassen jede für sich weiterentwickelt.

Es ist bekannt, das Telefonnetz in kundennahen Bereichen und damit das Diensteangebot der Individualkommunikation durch den Einsatz von sogenannten Digital Subscriber Line-Systemen (DSL-Systeme) zu erweitern. Die vorhandene Infrastruktur des Telefonnetzes, Kupfer-Doppeladern und z.T. Glasfasern, vom Netzknoten bzw. von der Vermittlungsstelle zum Kunden kann teilweise weiter genutzt werden. VDSL-Systeme ermöglichen Dienste mit einem Datentransport von bis zu 25 Mbit/s und große Bandbreiten, in beide Leitungsrichtungen (symmetrisch). Es werden Glasfasern als Transportmedium vom Netzknoten zum Kabelverzweiger benötigt, weshalb VDSL-Systeme daher Hybrid-Systeme mit Glasfaser- und Kupferleitungen sind. HDSL-Systeme sind für Dienste mit einem Datentransport von bis zu 2 Mbit/s symmetrisch geeignet, d.h. grundsätzlich auf Dienste der Individualkommunikation optimiert. ADSL-Systeme sind für Dienste mit einem Datentransport von bis zu 6 Mbit/s asymmetrisch mit einem Rückkanal mit einigen 10 Kbit/s ausgelegt. ADSL- und HDSL-Systeme können über Kupfer-Doppeladern von einem Netzknoten ohne weitere technische Maßnahmen im Kabelverzweiger, z.B. Zusammenkopplung verschiedenartiger Transportmedien, unmittelbar zum Kunden geführt werden.

Weiterhin wird die Leistungsfähigkeit des Breitbandkabel-Netzes erhöht, indem seine Leitungen mit parallelgeschalteten Glasfasern als Bypass ergänzt werden.

Nachteilig am Stand der Technik ist, daß die Netze der Individual- und der Verteilkommunikation separat weiterentwickelt werden. Diese Trennung von Individual- und Verteilkommunikation steht jedoch der gegenwärtigen Entwicklung entgegen, bei der der Kunde z.B. Multimedia-Dienste auswählen möchte, interaktiv sein Fernsehprogramm mitgestaltet oder für Internet-Übertragungen Bandbreiten und Übertragungsraten wie beim Fernsehen wünscht.

Der Erfindung liegt deshalb die Aufgabe zugrunde, in möglichst aufwandsarmer und kostengünstiger Weise die Leistungsfähigkeit des bestehenden Telefonnetzes dahingehend zu erweitern und umzugestalten, daß es auch für Dienste der Verteilkommunikation und/oder für neue Zwischenformen zwischen Individual- und Verteilkommunikation sowie für Individualkommunikation mit erhöhten Anforderungen an die Übertragungskapazitäten nutzbar wird.

Die Aufgabe wird gelöst durch ein Verfahren zur Leistungserweiterung eines Zugangsbereichs eines Telefonnetzes, wobei der Zugangsbereich wenigstens aus einem Netzabschluß beim Kunden, einem kundennahen Leitungs-Konzentrationspunkt, der mit Verteiler- und Verstärkertechnik ausgestattet ist, und einem Netzknoten zum Anschluß an ein oder mehrere langreichweitige Zubringernetze sowie aus den entsprechenden Verbindungsleitungen besteht, die zwischen dem Netzabschluß beim Kunden und dem kundennahen Leitungs-Konzentrationspunkt in der Regel Kupfer-Doppeladern und zwischen dem Leitungs-Konzentralionspunkt und dem Netzknoten Glasfaserkabel und/oder Kupferleitungen sind, und wobei der Netzabschluß beim Kunden sowie der Leitungs-Konzentrationspunkt mit DSL-Techniken (Digital Subscriber Line) zum Einsatz von DSL-Übertragungssystemem, insbesondere VDSL-Systemen, ausgerüstet sind, das durch folgende Merkmale gekennzeichnet ist:
a) LAN- (Local Area Network) spezifische Datenübermittlungssysteme, wie ATM (Asynchronous Transfer Mode) und/oder TCP/IP (Transmission Control Protocol/Internet Protocol) bzw. eine Kombination dieser sowie die entsprechende Hardware, werden in den Leitungs-Konzentrationspunkt und/oder als vorgelagerte Übermittlungstechnik in den Netzknoten implementiert, um den Datenßuß im Leitungs-Konzentrationspunkt nach dem LAN-Prinzip zu steuern, insbesondere um VDSL-Übertragungssysteme zu unterstützen und funktional zu erweitern.
b) Der Leitungs-Konzentrationspunkt wird nach dem Sternkoppler-Prinzip neu konfiguriert, wobei Sternkoppler-Prinzip bedeutet, daß eine Vielzahl von Kupfer- und/oder Glasfaserkabeln, die zum Netzabschluß beim Kunden führen und die in ihrer Gesamtheit ein Sternnetz bilden, mittels eines Koppelnetzwerks physikalisch mit einem zum Netzknoten führenden Glasfaserkabel gekoppelt werden. Der Datenfluß innerhalb des Koppelnetzwerks wird dann nach dem LAN-Prinzip gesteuert.
c) Zusätzliche Server, insbesondere Multimedia-Server, werden im Netz im Bereich des Netzknotens installiert, um das Netz der Individualkommunikation, insbesondere die VDSL-Techniken, einer integrativen Nutzung auch für die Verteilkommunikation zuzuführen, beispielsweise um eine Multimedia-Auswahlfunktion am Netzabschluß beim Kunden zu ermöglichen.
d) Neukonfiguration und Verwendung der Kupfer-Doppeladern im Bereich des Sternnetzes als LAN oder LAN-ähnliches Kommunikationsnetz.

Durch die Ausstattung des vorhandenen Telefonnetzes mit zusätzlichen Glasfaserkabeln im Rahmen der Leistungserweiterung mit DSL-Techniken werden gegenwärtig höhere Übertragungskapazitäten für die Individualkommunikation bereitgestellt. Diese hohen Übertragungskapazitäten werden jedoch durch das erfindungsgemäße Verfahren in vorteilhafter Weise einer zusätzlichen Nutzung für Verteilkommunikationsdienste zugeführt, da die zwischen Konzentrationspunkt und Vermittlungsstelle verwendeten Glasfasern prinzipiell auch für diese Dienste ausreichende Bandbreiten und Übertragungsraten aufweisen.

Die vorhandenen Komponenten, die Cu-Doppelader-Infrastruktur (Kupfer-Leitungen) zwischen Konzentrationspunkt und Kunden, die VDSL-Übertragungssysteme, die die Cu-Doppelader technologisch aufwerten, die Glasfaser zwischen Netzknoten und Konzentrationspunkt und der Konzentrationspunkt selbst, werden nach dem erfindungsgemäßen Verfahren neu konfiguriert und mit zusätzlicher Systemintelligenz erweitert. Dazu werden LAN-spezifische konzentrierende, intelligente Kopplungsmechanismen in den Konzentrationspunkt in Kundennähe abgebildet.

Der Konzentrationspunkt, der zuvor nur dazu diente, Leitungen zusammenzuführen, Daten auf diese zu verteilen und gegebenenfalls nachzuverstärken, wird zu einem integrierenden, zentralen Konzentrationspunkt. Er wird nach dem Sternkoppler-Prinzip neu konfiguriert. Im definierten kundennahen Bereich entsteht dadurch eine neue intelligente Struktur, die nach dem LAN-Prinzip arbeitet.

Diese Struktur wird um eine Multimedia-Auswahlfunktion erweitert. Die multimedialen Inhalte aller Art müssen in einem Server im Netz, vorzugsweise im Bereich eines Netzknotens, vorgehalten werden.

Glasfasern von zentralen Einrichtungen (Netzknoten, Vermittlungsstelle) werden bis in Kundennähe zu einem integrierenden Konzentrationspunkt geführt. Die auf dem letzten Abschnitt vom Konzentrationspunkt zum Kunden sternförmig verlaufenden Kupfer-Doppeladern werden mit VDSL-Übertragungssystemen ergänzt. Der Konzentrationspunkt stellt die physikalische Kopplung der Glasfaser mit den Cu-Leitungen sicher. Er gewährleistet als Bindeglied die Durchschaltung von der Glasfaser auf die VDSL-Systeme.

Der Datenfluß im Konzentrationspunkt wird durch leistungsfähige Übermittlungssysteme, wie ATM, TCP/IP bzw. eine Integration aus beiden, gesteuert. Die Übermittlungstechnik ist im Netzknoten (Vermittlungsstelle) abgebildet. Er wird über die Glasfaser zum POC geführt und dort auf die transparenten VDSL-Übertragungssysteme aufgesetzt, wodurch der Netzabsctuuß beim Kunden erreicht wird. Zwischen dem Netzknoten und dem Netzabschluß wird ein transparentes Übertragungsverfahren installiert.

Für die Durchschaltung von einer Glasfaser auf die VDSL-Systeme im Konzentrationspunkt wird ein Koppelnetz benötigt. Der sternförmig verteilte Verkehr wird im Konzentrationspunkt konzentriert und auf die Glasfaser durchgeschaltet. Umgekehrt wird der über Glasfaser geführte Verkehr, vom Netzknoten kommend, im Konzentrationspunkt auf die jeweiligen Leitungen des Sternnetzes durchgeschaltet. Der 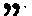 intern"-Verkehr, d.h. Kunden die innerhalb des definierten Sternnetzes miteinander kommunizieren, wird ebenfalls im Koppelnetzwerk durchgeschaltet. Dieses Koppelnetzwerk im Konzentrationspunkt wird nach dem Sternkoppler-Prinzip konfiguriert. Das Zugriffsverfahren im Sternkoppler auf die Übertragungsmedien arbeitet nach dem LAN-Prinzip, was folgende Vorteile mit sich bringt:

Der Datendurchsatz wird durch die LAN-Funktionalitäten innerhalb des LAN-Netzwerkes erhöht. Das Koppelnetzwerk, der Sternkoppler, ermöglicht die Schaltung mehrerer gleichzeitiger Verbindungen, die ohne Kollision aufgebaut und unterhalten werden können. Es werden weiterhin breitbandige bidirektionale Dienste ermöglicht, wodurch z.B. Internet-Kommunikation, insbesondere das Abrufen von umfangreichen Programmen und/oder Bildern, erheblich beschleunigt werden kann. Weiterhin kann die bidirektionale Verbindung auch größtenteils einseitig zur Verteilkommunikation genutzt werden, wobei jedoch eine Interaktion des Kunden mit dem Programmanbieter prinzipiell möglich ist, z.B. bei interaktive Videodiensten. Die LAN-Struktur ermöglicht weiterhin Bursty-Traffic-Verkehr, auch bidirektional, d.h. Datenübertragung mit schubweise auftretenden Datenbüscheln.

Vorzugsweise werden die VDSL-Systeme beim Kunden in einen intelligenten Netzabschluß, eine universelle Kommunikationssteckdose, integriert. Der Anschluß der Endeinrichtungen erfolgt über konventionelle Schnittstellen. Damit werden alle Ausprägungen, der mit diesem neuen System möglichen Leistungserhöhungen, für den Kunden nutzbar:

Es werden individuelle Zugriffsmöglichkeiten auf Dienstleistungen der Individual- und Verteilkommunikation geschaffen, worin auch Internetkommunikation enthalten ist. Gewünschte Bandbreiten können, im Rahmen der Systemgrenzen, flexibel bereitgestellt werden. Damit werden die Übertragungskapazitäten des Netzes im Zugangsbereich optimal ausgenutzt. Bidirektionale, interaktive multimediale Anwendungen mit dynamischer Bandbreitenzuordnung können realisiert werden. Auch breitbandige Internet-Zugänge können realisiert werden. Die Grenzen des Systems sind durch die mit VDSL-Übertragungssystemen übertragbare Bandbreite vorgegeben.

Die klasssische Verteilkommunikation wird um eine Multimedia-Auswahlfunktion erweitert: Aus einem Multimedia-Server, der im Netz installiert ist, kann der Kunde Multimedia-Anwendungen bzw. interaktive Videodienste auswählen.

Ein wesentlicher Beitrag zur Realisation des erfindinngsgemäßen Verfahrens ist die Verwendung LAN-spezifischer Systemtechnik innerhalb eines mit DSL-Techniken aufgerüsteten Telefonnetzes. Die LAN-spezifische Systemtechnik wird dazu verwendet, den Datenfluß innerhalb des Zugangsbereichs des Telefonnetzes nach dem LAN-Prinzip zu steuern. Damit kann das Telefonnetz zur Übertragung von Diensten der Verteilkommunikation, insbesondere mittels VDSL-Techniken, genutzt werden. Weiterhin wird in vorteilhafter Weise die vorhandene Kupferkabel-Infrastruktur im kundennahen Bereich durch Steuerung mit LAN-spezifischer Übertragungstechnik einer flexibleren Nutzung als LAN oder LAN-ähnliches lokales Kommunikationsnetzwerk zugeführt.

Ein Beispiel für die Anwendung des erfindungsgemäßen Verfahrens ist in der Zeichnung dargestellt und anschließend beschrieben. Dabei zeigen:
- Figur 1: eine schematische Darstellung eines Zugangsbereichs eines Telefonnetzes, welcher die Ausgangssituation vor Anwendung des erfindungsgemäßen Verfahrens darstellt
- Figur 2: eine schematische Darstellung eines Zugangsbereichs eines Telefonnetzes nach Anwendung des erfindinngsgemäßen Verfahrens

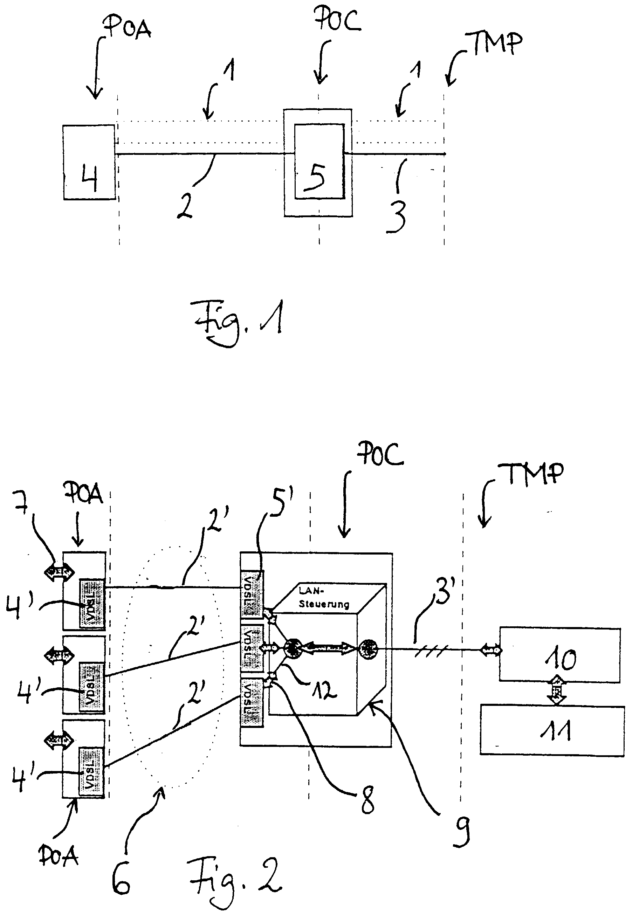

In Figur 1 ist die Ausgangskonfiguration eines Zugangsbereichs eines Telefonnetzes vor Anwendung des erfindungsgemäßen Verfahrens schematisch dargestellt. Insbesondere ist der gegenwärtige bzw. gegenwärtig geplante Einsatz von VDSL-Übertragungssystemen gemäß dem Stand der Technik schematisch gezeigt.

Der Zugangsbereich besteht aus den Elementen Netzknoten bzw. Transmission Point TMP, Leitungs-Konzentrationspunkt bzw. Point of Concentration POC und Netzabschluß beim Kunden bzw. Point of Access POA sowie den entsprechenden Verbindungsleitungen. Der Netzknoten wird auch als Vermittlungsstelle und der Leitungs-Konzentrationspunkt als Kabelverzweiger bezeichnet, wobei letzteres auf die gegenwärtige eher passive Funktion als reine Verteilereinrichtung einer vom Netzknoten kommenden Leitung auf zu Kunden führenden Leitungen mit möglicher Verstärkung der Signale - jedoch ohne Steuerung des Datenflusses - hinweist. Der Zugangsbereich ist höchst schematisch dargestellt, indem nur der Datentransfer vom Netzknoten TMP zu einem Leitungs-Konzentrationspunkt POC und von dort zu einem Kunden bzw. dessen Netzabschluß POA gezeigt ist. Tatsächlich werden jedoch von einem Netzknoten mehrere Konzentrationspunkte POC und von dort wieder eine Vielzahl von Kunden bedient. Jedem Kunden ist eine Kupfer-Doppelader 2 zugeordnet, wobei die Kupferadern 2 in ihrer Gesamtheit die Kupfer-Infrastruktur bilden. Kunden in größeren Wohngebäuden bzw. in Wohngebieten sind einem definierten gemeinsamen Konzentrationspunkt zugeordnet, der in der Regel bis zu einige hundert Meter vom Netzabschluß entfernt ist.

In den dargestellten Zugangsbereich sind VDSL-Techniken integriert, um Daten beispielsweise mittels des TelAs oder ISDN-Systems zu übermitteln, d.h. sowohl der Netzabschluß POA als auch der Konzentrationspunkt POC sind mit VDSL-Systemtechnik 4 bzw. 5 ausgestattet. Die Daten werden vom TMP zum POC über eine Glasfaserleitung 3 und vom POC zum POA über die dem Kunden zugeordnete Kupfer-Doppelader 2 übertragen. Das VDSL-System bedient sich damit insgesamt eines Glasfaser-Kupfer-Hybrids zur Datenübertragung. Bei symmetrischer bidirektionaler Übertragung von Daten können die Daten beispielsweise mit einer Übertragungsrate von maximal 25 Mbit/s übertragen werden, bei asymmetrischer Übertragungweise mit etwa der doppelten Rate.

Parallel zu den Glasfasern 3 wird auch die Kupfer-Infrastruktur 1 verwendet, um zwischen POC und TMP Daten mit herkömmlichen Übertragungstechniken zu übermitteln.

Figur 2 zeigt die Zielnetzkonfiguration des Zugangsbereichs eines Telefonnetzes nach Anwendung des erfindungsgemäßen Verfahrens zur Leistungserweiterung. Wie auch in Figur 1 gezeigt, geht vom Netzknoten TMP eine Glasfaserleitung 3' zum Konzentrationspunkt POC, wo einzelne Netzabschlüsse bei Kunden POA, von denen hier drei dargestellt sind, über Kupferkabel 2' angeschlossen sind. Wie bei der Ausgangskonfiguration aus Figur 1 sind sowohl POA als auch POC mit VDSL-Übermittlungstechnik 4' bzw. 5' ausgestattet. Das erfindungsgemäße Verfahren zeichnet sich dadurch aus, daß möglichst wenige Veränderungen an der Leitungs-Infrastruktur vorgenommen werden, sondern vor allem die Elemente POA, POC und TMP umgestaltet werden und sich dadurch die Funktionsweise des gesamten Zugangsbereichs ändert. Dies führt zu einem besonders günstigen Verhältnis von den aufzuwendenden Kosten zum erreichbaren Nutzen - der Leistungserweiterung - da die sehr kostenintensive Verlegung neuer Leitungen weitgehend vermieden und nur zusätzliche Systemtechnik installiert wird.

In den kundennahen Leitungs-Konzentrationspunkt POC sind LAN-spezifische Übermittlungssysteme implementiert, beispielsweise ATM (Asynchronous Transfer Mode), TCP/IP (Transmission Control Protocol/ Internet Protocol) oder eine Kombination dieser sowie die entsprechende Hardware. Die einzelnen Verbindungsleitungen 2' bzw. die Ausgangsleitungen 12 der jeweiligen zugeordneten VDSL-Technik 5' bilden in ihrer Gesamtheit ein sternförmiges Netz, das im Sternkoppler 9 zusammengeführt und physikalisch mit der zum TMP führenden Glasfaser 3' gekoppelt ist. Dazu weisen die VDSL-Einheiten 5' Schnittstellen 8 auf, welche zum Anschluß der Ausgangsleitungen 12 geeignet sind. Die funktionelle Kopplung der VDSL-Einheiten an die Glasfaser 3' innerhalb des Sternkopplers 9 wird durch die aufgesetzte LAN-Steuerung bewerkstelligt. Diese steuert den Datenfluß im Leitungs-Konzentrationspunkt POC, insbesondere innerhalb des Sternkopplers 9 nach dem LAN-Prinzip.

Die Leitungen 12, die das Sternnetz ausmachen, sind, abgesehen von den dazwischengeschalteten VDSL-Einheiten, die direkte Fortsetzung der Kupferadern 2', also des Kupferkabel-Netzwerks 6. Somit wird auch dieses Kupferkabel-Netzwerk 6 nach dem LAN-Prinzip verwaltet, da der Datenfluß durch das Kupferkabel-Netzwerk 6 im Sternkoppler gesteuert wird. Beispielsweise werden Verbindungen, die innerhalb des Sternnetzes eingegangen werden sollen, bereits im zugeordneten Sternkoppler 9 bzw. im POC geschaltet. Weiterhin ermöglicht der nach dem LAN-Prinzip gesteuerte Sternkoppler bidirektionalen Bursty-Traffic-Verkehr, womit eine effektivere Übertragung von Daten realisiert wird. Weiterhin kann der Kunde mehrere Verbindungen gleichzeitig eingehen, da die LAN-Steuerung auch einen dementsprechenden Datenfluß verwalten kann.

Die für die LAN-Steuerung notwendige Übermittlungstechnik 10 ist ins Netz im Bereich des Netzknotens TMP, auch als Teil des Netzknotens, vorgelagert. Von dort werden die Steuerbefehle über die Glasfaser 3' dem Konzentrationspunkt POC, insbesondere dem Sternkoppler 9 übermittelt. Im Bereich des Netzknotens ist weiterhin ein Server 11, z.B. ein Multimedia-Server, eingerichtet, in dem Multimedia-Dienste verschiedener Art bereitgehalten werden und abrufbar sind. Dazu ist der Netzabschluß beim Kunden so gestaltet, daß er mit den ins Netz vorgelagerten Strukturen zu interagieren imstande ist. Der Netzabschluß sendet beispielsweise einen Befehl an den Server 11, der einen bestimmten Dienst anfordert. Dieser Dienst wird dann dem Kunden zur Verfügung gestellt, indem die Übermittlungstechnik 10 veranlaßt, daß er auf die entsprechende Leitung zum Kunden aufgesetzt wird. Dies hat den Vorteil, daß nur die Dienste den Kunden erreichen, die tatsächlich benötigt werden, und das direkte kundennahe Netz 6 nicht mit allen vorhandenen Diensten belastet wird. So kann dem Kunden eine seinen Bedürfnissen angepaßte Frequenzbandbreite und Übertragungskapazität zur Verfügung gestellt werden. Diese Umverteilung der vorhandenen Kapazitäten je nach Bedürfnis führt dazu, daß das Gesamtnetz besser ausgenutzt wird.

Im Multimedia-Server 11 werden sämtliche Kommunikationsdienstleistungen bereitgehalten, also neben den üblichen Diensten der Individualkommunikation, wie Telefon und Fax, auch Internet und Dienste der Verteilkommunikation, wie Fernsehen oder Radio, und neue Mischformen, z.B. interaktive Videodienste. Die breitbandigen Dienste der Verteilkommunikation und auch Internetdienste, die einen hohen Datenfluß erfordern, werden mittels der VDSL-Techniken übertragen, die für große Bandbreiten - ursprünglich nur innerhalb der Individualkommunikation - ausgelegt ist.

Damit die verschiedenartigen Dienste nach der Übertragung über das Netz beim Kunden auf die entsprechenden Endgeräte verteilt werden können, ist der Netzabschluß POA als eine universelle Kommunikationssteckdose ausgebildet, die herkömmliche Schnittstellen 7 zum Anschluß an Endgeräte wie z.B. Telefon und Fernseher aufweist.

### Liste der Bezugszeichen:

- POA: Netzabschluß beim Kunden (point of access)
- POC: Leitungs-Konzentrationspunkt (point of concentration)
- TMP: Netzknoten (transmission point)
- 1: Kupferkabel-Infrastruktur
- 2, 2': Kupfer-Doppelader
- 3, 3': Glasfaser
- 4, 4': VDSL-Systemtechnik - beim Kunden
- 5, 5: -im POC
- 6: LAN/LAN-ähnliches Netzwerk
- 7: Schnittstelle für Endgeräte
- 8: Schnittstelle an VDSL-Systemtechnik im POC
- 9: Sternkoppler, Koppelnetzwerk
- 10: Übermittlungstechnik
- 11: Server
- 12: VDSL-Ausgangsleitungen

## Patentansprüche

1. Verfahren zur Leistungserweiterung eines Zugangsbereichs eines Telefonnetzes, wobei der Zugangsbereich wenigstens aus einem Netzabschluß beim Kunden (POA), einem kundennahen Leitungs-Konzentrationspunkt (POC), der mit Verteiler- und Verstärkertechnik ausgestattet ist, und einem Netzknoten (TMP) zum Anschluß an ein oder mehrere langreichweitige Zubringernetze sowie aus den entsprechenden Verbindungsleitungen (1, 2, 2', 3, 3') besteht, die zwischen dem Netzabschluß beim Kunden (POA) und dem kundennahen Leitungs-Konzentrationspunkt (POC) in der Regel Kupfer-Doppeladern (1, 2, 2') und zwischen dem Leitungs-Konzentrationspunkt (POC) und dem Netzknoten (TMP) Glasfaserkabel (3, 3') und/oder Kupferleitungen (1, 2, 2') sind, und wobei der Netzabschluß beim Kunden (POA) sowie der Leitungs-Konzentrationspunkt (POC) mit DSL-Techniken (Digital Subscriber Line) zum Einsatz von DSL-Übertragungssystemen, insbesondere VDSL-Systemen (4, 4', 5, 5'), ausgerüstet sind,
gekennzeichnet durch folgende Merkmale,
a) Implementierung LAN- (Local Area Network) spezifischer Datenübermittlungssysteme, wie ATM (Asynchronous Transfer Mode) und/oder TCP/IP (Transmission Control Protocol/ Internet Protocol) bzw. eine Kombination dieser sowie die entsprechende Hardware, in den Leitungs-Konzentrationspunkt (POC) und/oder als vorgelagerte Übermittlungstechnik (10) in den Netzknoten zur Steuerung des Datenflusses im Leitungs-Konzentrationspunkt (POC) nach dem LAN-Prinzip, insbesondere zur Unterstützung und funktionalen Erweiterung der VDSL-Übertragungssysteme;
b) Neukonfiguration des Leitungs-Konzentrationspunkts (POC) nach dem Sternkoppler-Prinzip, indem eine Vielzahl von Kupfer- und/oder Glasfaserkabeln, die zum Netzabschluß beim Kunden (POA) führen und die in ihrer Gesamtheit ein sternförmig zusammenlaufendes Netz bilden, mittels eines Koppelnetzwerks (9) physikalisch mit einem zum Netzknoten (TMP) führenden Glasfaserkabel (3') gekoppelt werden und der Datenfluß innerhalb des Koppelnetzwerks nach dem LAN-Prinzip gesteuert wird,
c) Installation zusätzlicher Server (11), insbesondere Multimedia-Server (11), im Netz im Bereich des Netzknotens (TMP) zur Nutzung des Netzes der Individualkommunikation, insbesondere der VDSL-Techniken (4, 4', 5, 5'), für die Verteilkommunikation, beispielsweise um eine Multimedia-Auswahlfunktion am Netzabschluß beim Kunden (POA) zu ermöglichen;
d) Neukonfiguration und Verwendung der Kupfer-Doppeladern (1, 2, 2') im kundennahen Bereich als LAN oder LAN-ähnliches Kommunikationsnetz (6).

2. Verfahren nach Anspruch 1, dadurch gekennzeichnet,
daß die VDSL-Systeme (4, 4') auf der Seite des Kunden in einen Netzabschluß (POA) als universelle Kommunikationssteckdose integriert werden, an den mittels konventioneller Schnittstellen (7) Endgeräte, wie Telefon, Fax, lokale Rechner, Fernseher und dergleichen, angeschlossen werden und der mit dem Konzentrationspunkt (POC) in Wechselwirkung tritt.

3. Verfahren zur Datenübermittlung innerhalb eines Zugangsbereichs eines Telefonnetzes, welcher gemäß Anspruch 1 oder 2 gestaltet ist,
dadurch gekennzeichnet,
daß der Zugriff vom Netzabschluß beim Kunden (POA) auf die Übertragungsmedien, d.h. die funktionelle Kopplung der vom Netzabschluß zum Leitungs-Konzentrationspunkt (POC) mit den vom Leitungs-Konzentrationspunkt (POC) zum Netzknoten (TMP), im Leitungs-Konzentrationspunkt (POC) nach dem LAN-Prinzip vermittelt wird, z.B. durch LAN-spezifische Steuerprotokolle, so daß bidirektionaler Datentransfer und/oder der gleichzeitige Aufbau mehrerer Verbindungen und/oder eine Multimedia-Auswahlfunktion möglich wird.

4. Verwendung LAN-spezifischer Systemtechnik, wie Asynchronous Transfer Mode, ATM, und/oder Transmission Control Protocol/ Internet Protocol, TCP/IP, bzw. eine Kombination dieser, zur Steuerung des Datenflusses innerhalb eines mit DSL-Techniken aufgerüsteten Telefonnetzes, insbesondere zur Nutzung des Telefonnetzes für Übertragung von Diensten der Verteilkommunikation und/oder zur Schaffung von Mischformen von Verteil- und Individualkommunikation, z.B. Multimedia-Auswahl.

5. Verwendung eines Teils eines Zugangsbereichs eines Telefonnetzes, insbesondere der im kundennahen Bereich vorhandenen Infrastruktur, d.h. einer Vielzahl von Netzabschlüssen bei Kunden (POA) und einem diesen Netzabschlüssen gemeinsamen Leitungs-Konzentrationspunkt (POC) samt der dort installierten Systemtechnik (4, 4', 5, 5') sowie der zwischen Netzabschluß und Leitungs-Konzentrationspunkt verlaufenden Leitungsadern (1, 2, 2'), zum Aufbau eines LANs oder eines LAN-ähnlichen Kommunikationsnetzwerks (6) im kundennahen Bereich.
